# EUROPEAN PATENT SPECIFICATION

(11) **EP 1 502 839 B1**
(45) Date of publication and mention of the grant of the patent: **23.12.2009**
(21) Application number: 04076874.9
(22) Date of filing: 29.06.2004
(51) Int. Cl.: B62D 12/00, B62D 7/08, B62D 3/14

(54) **Articulated tractor with steered front wheels**
Knicklenk-Traktor mit Vorderradlenkung
Tracteur articulé avec roues avant orientables

(30) Priority: 30.07.2003 IT mi20031562
(43) Date of publication of application: 02.02.2005
(73) Proprietor: BCS S.p.A., 20123 Milano (MI) (IT)
(72) Inventor: Castoldi, Fabrizio, 20145 Milano (IT)
(74) Representative: De Gregori, Antonella

(56) References cited:
- EP-A- 1 174 329
- CA-A1- 2 485 868
- FR-A- 2 549 437
- JP-A- 53 080 636
- JP-U- 4 031 667
- US-A- 5 899 292

## Description

The present invention refers to an articulated tractor with high steering capability.

In the following description with the generic term "tractor" we mean both small farming tractors and self-propelled operating machines that are vehicles dedicated to forming and to the maintenance of green space in general. These vehicles have been developed according to wide and varying types.

For example, there are tractors with a rigid frame and with an articulated frame.

The rigid frame, although it offers a structure of the tractor that is generally simpler, does, however, have the drawback of having the central engine connected to the rigid part, in a somewhat raised position with the barycentre tending to be high, with a certain degree of difficulty in stability, above all when on bumpy ground. This tractor foresees an oscillating axle at a front end of the longitudinal frame that allows the possibility of adaptation to the ground.

However, this tractor does not have satisfactory steering capability, above all in areas that are narrow and difficult to access. Indeed, this type of tractor allows steering of around 50° and in any case, in a restricted field of action, requires that manoeuvres be carried out for rapid changes of direction, for example during the cultivation of an orchard.

Tractors with an articulated frame foresee two parts, articulated together centrally, the engine arranged in the front articulated part and have non-steering wheels. Changes in direction thus take place by making the front part rotate about the articulation or central hinge. The wheels of the rear part describe the same radius as the front wheels and thus it is possible to tackle corners with a certain degree of ease. Each possible tool pulled by the rear part, with such an articulated arrangement, does not "swing about" and is more controllable.

In any case, although such tractors are very narrow, they also are unable to carry out sharp turns.

A further substantial division is made between tractors having wheels with the same diameter and those with front wheels having a smaller diameter than the rear wheels. This division, once applied to the general types indicated above, also gives problems similar to those outlined previously.

Still another type of tractor is shown for example in document FR-A-2 549 437, wherein an agricultural vehicle having a first steering device on the front axle and a second steering device, formed by an articulation on the vehicle frame, is disclosed. However, the two steering devices are operated separately, the second steering device merely acting as an auxiliary device for the first, conventional steering device. Therefore, with this type of vehicle, a particularly high steering capability can not be achieved.

The general purpose of the present invention is therefore that of realising an articulated tractor that can have a high steering capability avoiding manoeuvring and slowing down in work.

Another purpose is that of realizing an articulated tractor with high steering capability which provides high stability, also for sudden changes in direction.

Another purpose is that of having an articulated tractor with a high steering capability that has good steer control, also in farms and other particularly narrow working environments.

These purposes according to the present invention are accomplished by realising an articulated tractor with high steering capability as outlined in claim 1.

Further characteristics of the invention are highlighted in the subsequent claims.

The characteristics and advantages of an articulated tractor with high steering capability according to the present invention shall become clearer from the following description, given as an example and not limiting purposes, referring to the attached schematic drawings, in which:

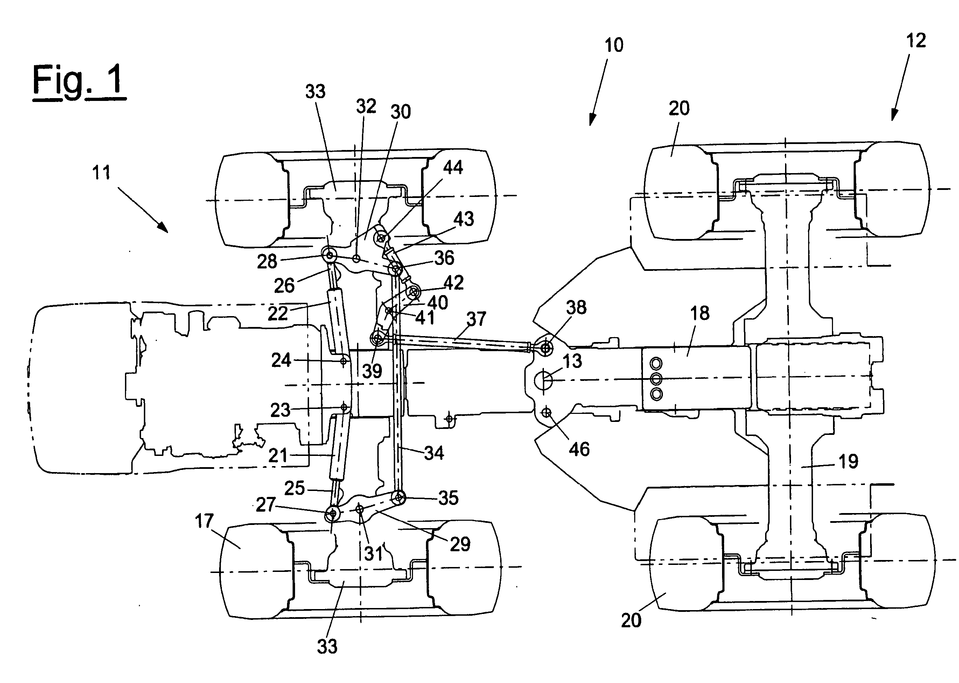

- figure 1 is a plan view from above of a first embodiment of an articulated tractor with high steering capability travelling in a straight line according to the invention;

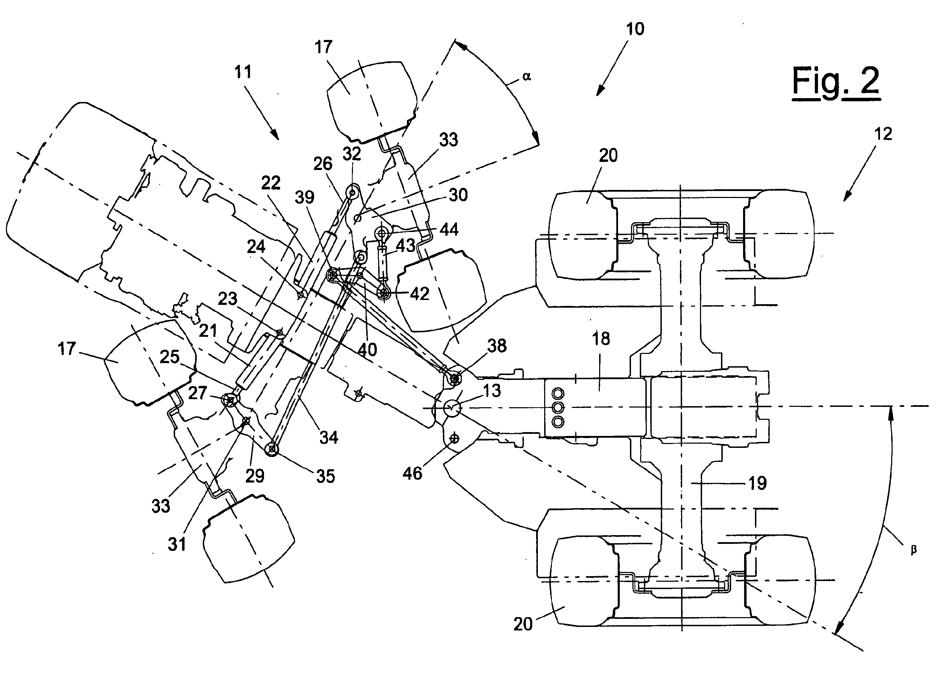

- figure 2 is a view similar to the one shown in figure 1 with the front part of the tractor in steering position;

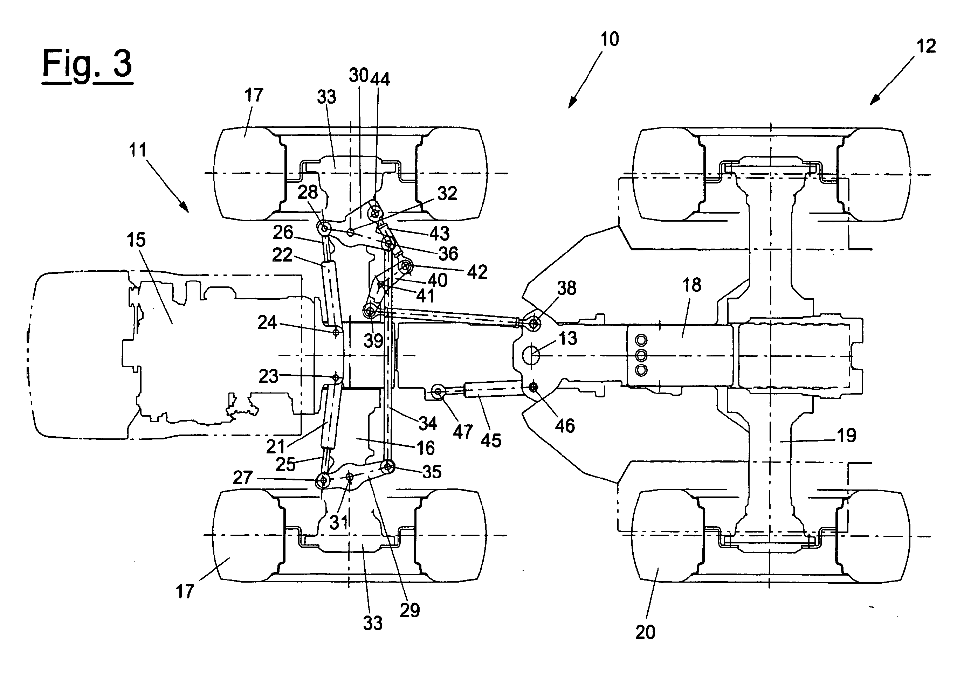

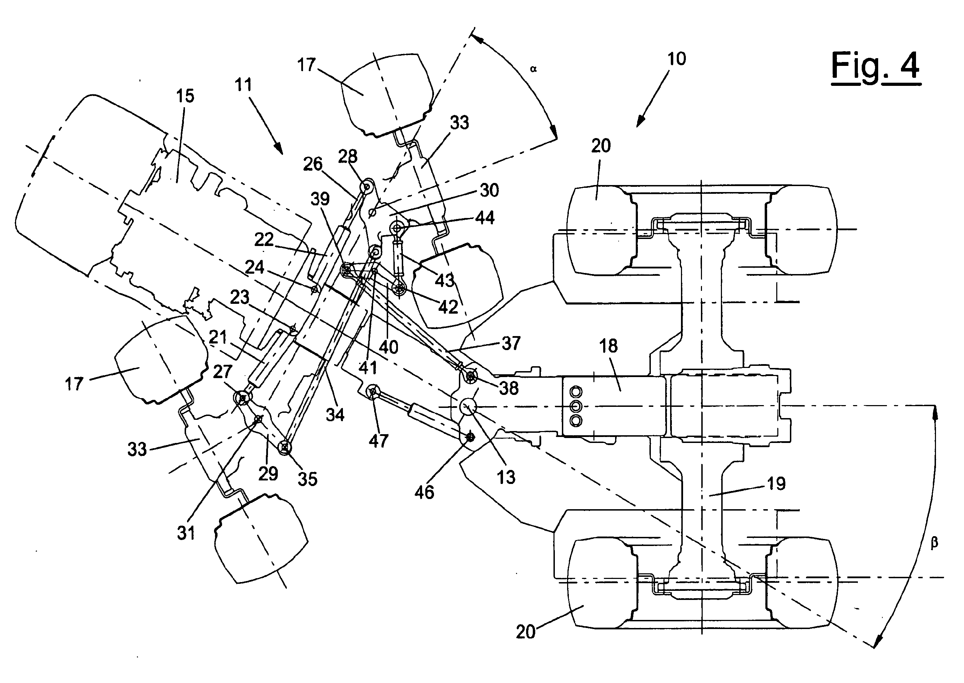

- figures 3 and 4 are plan views from above of a second embodiment of an articulated tractor with high steering capability according to the invention travelling in a straight line and in steering position;

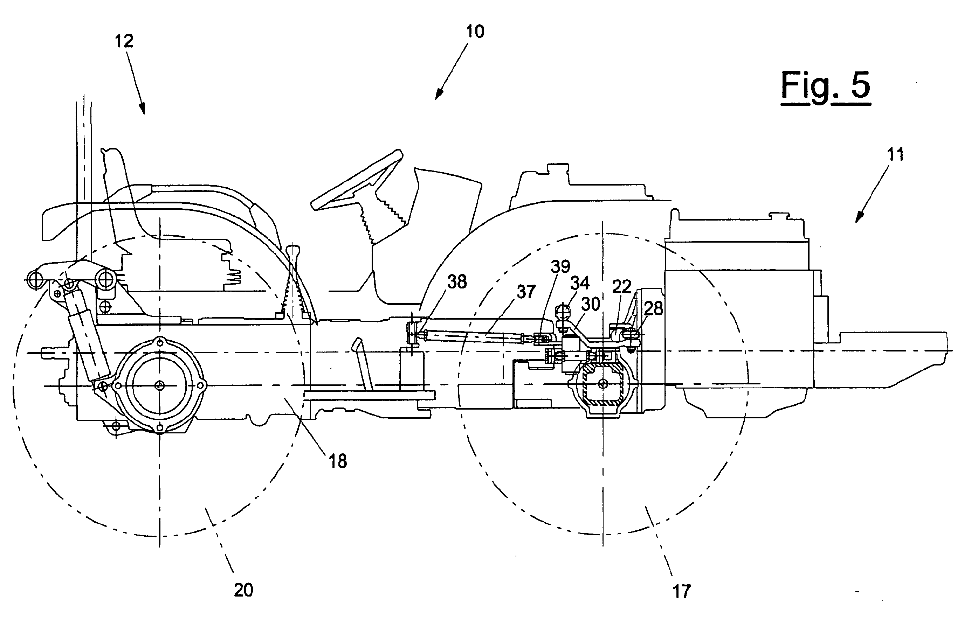

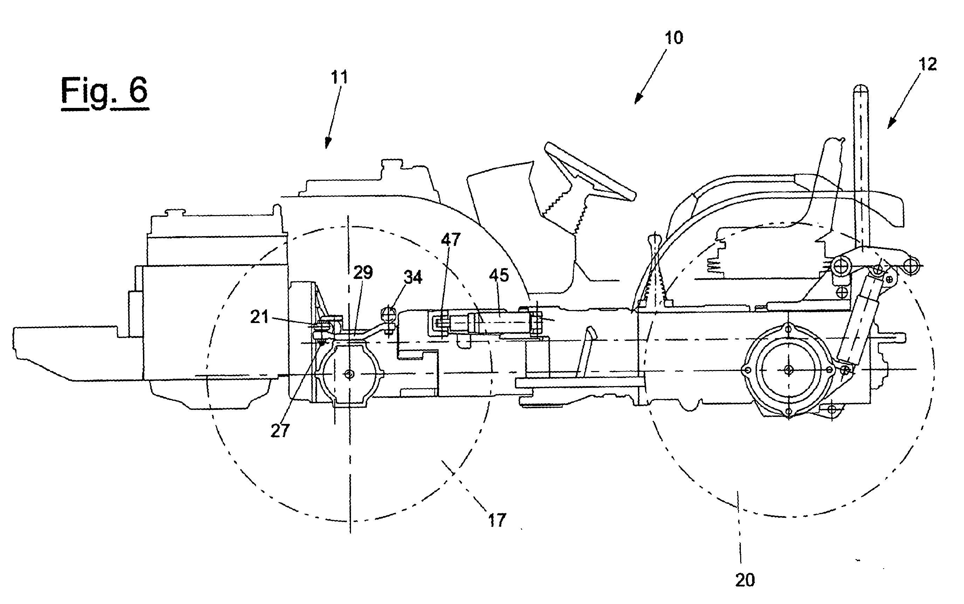

- figures 5 and 6 are schematic side views of the tractor shown in figure 3;
- figures 7A and 7B are plan views of a third embodiment of a tractor travelling in a straight line that show firstly the steering group and then the compensation group arranged on the same tractor;

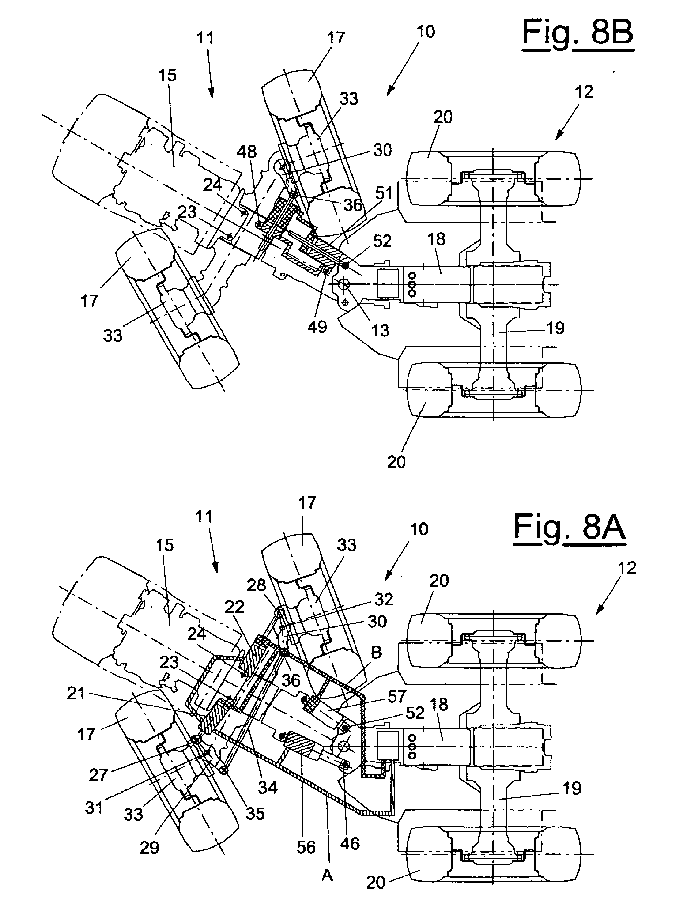

- figures 8A and 8B are views similar to those of figures 7A and 7B with the tractor in steering position.

With reference to the figures, an articulated tractor with high steering capability according to the present invention is shown, wholly indicated with 10. However, it must be remembered that with the generic term "tractor" we mean both small farming tractors and self-propelled operating machines that are vehicles dedicated to farming and to the maintenance of green space in general.

This tractor 10 comprises a front part 11 and a rear part 12, articulated together at 13. The front part 11 carries, on a respective frame 14, an engine 15 in a low central position with improved weight distribution and stability. A front axle 16 carries two front wheels 17 that steer with respect to it. The rear part 12, on a respective frame 18, foresees a rear axle 19 provided with respective rear wheels 20. Alternatively, the front wheels 17 and rear wheels 20 can have the same diameter or else, in a different embodiment, he front ones can have a smaller diameter.

At the front axle 16 a steering actuator group is arranged comprising a pair of dual-effect hydraulic cylinders 21 and 22, arranged on opposite sides with respect to the frame 14 and pivoted at first ends at 23 and 24 to the frame itself. Opposite free ends of stems 25 and 26 of these hydraulic cylinders 21 and 22 are pivoted to them at 27 and 28 with levers 29 and 30 integral, through central pins 31 and 32, with hubs of the wheels 17, schematised at 33. A synchronisation rod 34 is arranged between the levers 29 and 30, connected to them through pivots 35 and 36. This rod 34 interconnects the rotation of the two wheels 17.

A synchronisation group is also foreseen that comprises a rigid shaft 37, pivoted at one of its ends at 38 to the frame 18 of the rear part 12, which acts together with a respective lever system, as a steer synchronisation element. In reality, the rigid shaft 37 is pivoted at the other end at 39 to a rocker 40 pivoted integrally at 41 to the frame 14 of the front part 11. The rocker 40 at the other end is in turn pivoted at 42 to a biscuit 43 that acts as an articulated connection at 44 with the lever 30.

This particular connection arrangement between the rear part 12 and the steer group of the front part 11 thus realises a steering actuator group (21, 22, 34, 36, 37, 40) connected to both of the front wheels 17. This provision allows a correct synchronisation of the steering elements with the various parts upon the actuation of the steer command cylinders 21 and 22.

In order to make driving more regular and steering easier, it is possible to foresee at least one further dual-effect hydraulic cylinder 45 arranged on articulated ends at 46 and 47, respectively, at the frame 14 of the front part 11 and at the frame 18 of the rear part 12 of the tractor 10. Such a cylinder, suitably synchronised with the other two cylinders 21 and 22, allows both steering and driving to be facilitated, making both smoother and easier.

As can be seen from the figures, the presence of the two cylinders 21 and 22, of the synchronisation group and of the central articulation at 13 between the front part 11 and the rear part 12 increases the steering capability. Indeed, a first steering angle α of the wheels 17 with respect to the front axle 16 is added to by a second angle β of rotation of the front part 11 with respect to the rear part 12 of the tractor 10. In the illustrated example, the first steering angle α can be around 40° and the second angle β of rotation of the front part 11 with respect to the rear part 12 of the tractor 10 can be around 30°, but other values of the angles indicated above can also be used.

In a different alternative arrangement to the mechanical one outlined above consisting of the rigid shaft 37 and the lever system connected to it, the synchronisation group operatively acting together with the steering group, connected to both of the front wheels 17, can be of the hydrostatic type.

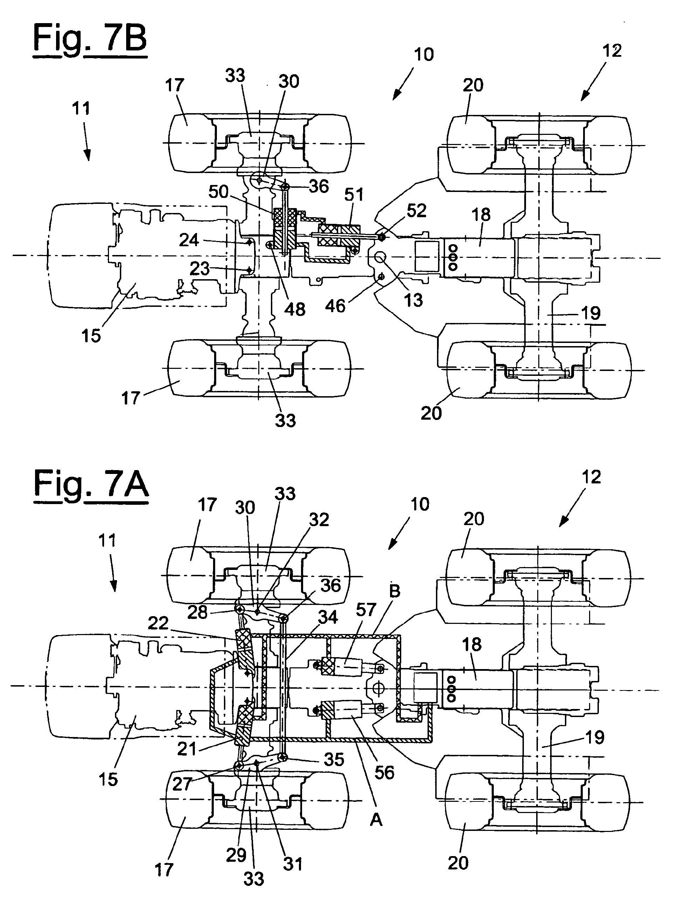

In this case, as well as the steering command cylinders 21 and 22 (figure 7A), further cylinders can be foresees arranged between the front part 11 and the rear part (figure 7B).

Indeed, a pair of further cylinders 50 and 51 can be foreseen connected together in a closed circuit in series totally hydrostatically. Such cylinders 50 and 51, are pivoted at 36, 48 and 49, 52 respectively, at their ends. The first cylinder 50 is arranged between the lever 30 of the hub of the wheel 17 and the front frame 14 and the second cylinder 51 is arranged between the front frame 14 and the rear frame 18.

The two cylinders 50 and 51 are connected together in such a way as to realise a perfect synchronisation due to the movement of the two steering command cylinders 21 and 22, maintaining, like for the previous mechanical embodiment, a perfect correlation and synchronisation of oscillating movement between the front part 11 and the rear part 12.

The closed hydrostatic circuit directly ensures their displacement as the two steering command cylinders 21 and 22 displace.

In this way, as shown in the respective figures, for steering around to the left, an actuation in one direction of the cylinder 21 gives a correlated actuation of the cylinder 22.

It can easily be seen that in an initial step of travel in a straight line, these cylinders 21 and 22, with dual-effect, are not actuated and the circuit is at rest. When the driver acts upon the steering wheel of the tractor, the pressure actuation of one cylinder, for example the cylinder 22, occurs and the other cylinder, for example the cylinder 21, is arranged in discharge position.

Indeed, when one wishes to make a turn to the left, as represented in the figures, it is sufficient to allow the discharge of a part of the circuit, schematised at A in the left branch, and to keep the pressure on the other part of the circuit, schematised at B in the right branch.

Should one wish to carry out steering with greater precision, it is possible to foresee a further pair of hydraulic cylinders 56 and 57, hydraulically connected in parallel with respect to the pair of cylinders 21 and 22, for example with simple effect, which act to ease and soften manoeuvring. In a simplified embodiment these two cylinders 56 and 57 can be reduced, like for the example described previously, to a single dual-effect cylinder.

This further pair of cylinders 56 and 57, placed in an articulated manner between the front frame 14 and the rear frame 18, makes driving and steering easier and more regular.

According to the invention an articulated tractor has thus been realised that is able to have high steering capability, whilst still avoiding additional manoeuvres and slowing down when working.

Moreover, the articulated tractor has high stability, also in the presence of rapid changes in direction.

It has thus been seen that an articulated tractor with high steering capability according to the present invention realises the purposes outlined previously.

The articulated tractor with high steering capability of the present invention thus conceived is susceptible to numerous modifications and variants, all of which are covered by the same inventive concept.

Moreover, in practice, the materials used, as well as their sizes and the components, can be whatever according to the technical requirements.

## Claims

1. Articulated farming tractor comprising a front part (11) and a rear part (12), articulated together by a central articulation (13), said front part (11) carrying, on a front frame, an engine (15) and a front axle (16) with two front wheels (17), said rear part (12) carrying, on a rear frame (18), a rear axle (19) with two rear wheels (20), said front wheels (17) steering through at least one actuator group (21, 22, 34, 36, 37, 40, 50, 51) connected to both of said front wheels (17), **characterised in that** said at least one actuator group comprises:
• a pair of dual-effect hydraulic cylinders (21, 22), arranged at opposite sides with respect to said front frame and pivoted between said front frame and levers (29, 30) forming part of hubs of said front wheels (17),
• a synchronisation rod (34), arranged articulated between said levers (29, 30), and
• a synchronisation group (37, 50, 51), arranged between said front part (11) and said rear part (12), said synchronisation group being operatively connected to both of said front wheels (17).

2. Tractor according to claim 1, **characterised in that** said synchronisation group comprises a rigid shaft (37), pivoted at a first end (38) to said rear frame (18) and at the other end (39) to an articulated lever system (36, 40) to one (30) of said levers (29, 30).

3. Tractor according to claim 2, **characterised in that** said articulated lever system comprises a rocker (40) centrally pivoted by an articulation (41) to said front frame and a biscuit (43) in turn pivoted at its ends by an articulation (42) to said rocker (40) and by an articulation (44) to said lever (30).

4. Tractor according to claims 2 or 3, **characterised in that** it foresees at least one further dual-effect hydraulic cylinder (45) arranged with articulated ends (46, 47) respectively with said front frame and with said rear frame (18), said further cylinder (45) being synchronised with said pair of cylinders (21, 22) to ease both steering and driving.

5. Tractor according to claim 1, **characterised in that** said synchronisation group comprises a pair of hydrostatic cylinders (50, 51) arranged in a closed circuit in series, one cylinder (50) being pivoted at its ends (36, 48) between a lever (30) of the hub of the wheel (17) and said front frame, and the other cylinder (51) being pivoted at its ends (49, 52) between said front frame and said rear frame (18).

6. Tractor according to claim 5, **characterised in that** said first pair of dual-effect hydraulic cylinders (21, 22) also has at least one dual-effect cylinder (56 or 57) attached to it placed in an articulated manner between said front frame and said rear frame (18).

7. Tractor according to claim 5, **characterised in that** said first pair of dual-effect hydraulic cylinders (21, 22) also has a second pair of cylinders (56, 57) with simple effect attached to it placed in an articulated manner between said front frame and said rear frame (18).

## Patentansprüche

1. Knickgelenk-Ackerschlepper mit einem vorderen Teil (11) und einem hinteren Teil (12), die durch ein Zentralgelenk (13) gelenkig miteinander verbunden sind, wobei der vordere Teil (11) auf einem vorderen Rahmen einen Motor (15) und eine Vorderachse (16) mit zwei Vorderrädern (17) trägt, der hintere Teil (12) auf einem hinteren Rahmen (18) eine Hinterachse (19) mit zwei Hinterrädern (20) trägt, und wobei die Vorderräder (17) durch zumindest eine mit den beiden Vorderrädern (17) verbundene Aktuatorbaugruppe (21, 22, 34, 36, 37, 40, 50, 51) lenken, **dadurch gekennzeichnet, dass** die zumindest eine Aktuatorbaugruppe umfasst:
- ein Paar doppelt wirkender Hydraulikzylinder (21, 22), die bezüglich des vorderen Rahmens an entgegengesetzten Seiten angeordnet und zwischen dem vorderen Rahmen und Hebeln (29, 30) angelenkt sind, die einen Teil von Naben der Vorderräder (17) bilden,
- eine Synchronisationsstange (34), die gelenkig zwischen den Hebeln (29, 30) angeordnet ist, und
- eine Synchronisationsbaugruppe (37, 50, 51), die zwischen dem vorderen Teil (11) und dem hinteren Teil (12) angeordnet ist, wobei die Synchronisationsgruppe betriebsfähig mit beiden der Vorderräder (17) verbunden ist.

2. Schlepper nach Anspruch 1, **dadurch gekennzeichnet, dass** die Synchronisationsbaugruppe eine starre Welle (37) aufweist, die mit einem ersten Ende (38) an dem hinteren Rahmen (18) und mit dem anderen Ende (39) über ein Gelenkhebelsystem (36, 40) an einem (30) der Hebel (29, 30) angelenkt ist.

3. Schlepper nach Anspruch 2, **dadurch gekennzeichnet, dass** das Gelenkhebelsystem einen Kipphebel (40) aufweist, der mittels einer Gelenkverbindung (41) mittig an dem vorderen Rahmen angelenkt ist, und einen Lenker (43), der seinerseits an seinen Enden durch eine Gelenkverbindung (42) an dem Kipphebel (40) und durch eine Gelenkverbindung (44) an dem Hebel (30) angelenkt ist.

4. Schlepper nach Anspruch 2 oder 3, **dadurch gekennzeichnet, dass** zumindest ein weiterer, doppelt wirkender Hydraulikzylinder (45) vorgesehen ist, der mit Gelenkenden (46, 47) an dem vorderen Rahmen bzw. dem hinteren Rahmen (18) angeordnet ist, wobei der weitere Zylinder (45) mit dem Zylinderpaar (21, 22) synchronisiert ist, um sowohl ein Lenken als auch ein Fahren zu erleichtern.

5. Schlepper nach Anspruch 1, **dadurch gekennzeichnet, dass** die Synchronisationsbaugruppe ein Paar hydrostatischer Zylinder (50, 51) aufweist, die in Reihe in einem geschlossenen Kreislauf angeordnet sind, wobei ein Zylinder (50) mit seinen Enden (36, 48) zwischen einem Hebel (30) der Nabe des Rades (17) und dem vorderen Rahmen angelenkt ist und der andere Zylinder (51) mit seinen Enden (49, 52) zwischen dem vorderen Rahmen und dem hinteren Rahmen (18) angelenkt ist.

6. Schlepper nach Anspruch 5, **dadurch gekennzeichnet, dass** an dem ersten Paar doppelt wirkender Hydraulikzylinder (21, 22) ferner wenigstens ein doppelt wirkender Zylinder (56) oder (57) angebracht und auf eine gelenkige Art und Weise zwischen dem vorderen Rahmen und dem hinteren Rahmen (18) angeordnet ist.

7. Schlepper nach Anspruch 5, **dadurch gekennzeichnet, dass** an dem ersten Paar doppelt wirkender Hydraulikzylinder (21, 22) ferner ein zweites Paar einfach wirkender Zylinder (56, 57) angebracht und auf eine gelenkige Art und Weise zwischen dem vorderen Rahmen und dem hinteren Rahmen (18) angeordnet ist.

## Revendications

1. Tracteur agricole articulé comprenant une partie avant (11) et une partie arrière (12), articulées ensemble par une articulation centrale (13), ladite partie avant (11) supportant, sur un châssis avant, un moteur (15) et un essieu avant (16) avec deux roues avant (17), ladite partie arrière (12) supportant, sur un châssis arrière (18), un essieu arrière (19) avec deux roues arrière (20), lesdites roues avant (17) s'orientant par le biais d'au moins un groupe d'actionneurs (21, 22, 34, 36, 37, 40, 50, 51) raccordé aux deux desdites roues avant (17), **caractérisé en ce que** ledit au moins un groupe d'actionneurs comprend :
une paire de vérins hydrauliques à double effet (21, 22), disposés sur des côtés opposés par rapport audit châssis avant, et montés pivotant entre ledit châssis avant et des leviers (29, 30) faisant partie des moyeux desdites roues avant (17),
une tige de synchronisation (34) montée articulée entre lesdits leviers (29, 30), et
un groupe de synchronisation (37, 50, 51), disposé entre ladite partie avant (11) et ladite partie arrière (12), ledit groupe de synchronisation étant raccordé de manière opérationnelle aux deux desdites roues avant (17).

2. Tracteur selon la revendication 1, **caractérisé en ce que** ledit groupe de synchronisation comprend un arbre rigide (37), monté pivotant à une première extrémité (38) sur ledit châssis arrière (18) et à l'autre extrémité (39) sur un système de levier (36, 40) articulé sur l'un (30) desdits leviers (29, 30).

3. Tracteur selon la revendication 2, **caractérisé en ce que** ledit système de levier articulé comprend un culbuteur (40) monté pivotant de manière centrale par une articulation (41) sur ledit châssis avant et un biscuit (43) monté pivotant à son tour à ses extrémités par une articulation (42) par rapport sur ledit culbuteur (40) et par une articulation (44) sur ledit levier (30).

4. Tracteur selon la revendication 2 ou 3, **caractérisé en ce que** l'on prévoit au moins un vérin supplémentaire hydraulique à double effet (45) agencé avec des extrémités articulées (46, 47) respectivement sur ledit châssis avant et sur ledit châssis arrière (18), ledit vérin supplémentaire (45) étant synchronisé avec ladite paire de vérins (21, 22) pour faciliter à la fois la direction et la conduite.

5. Tracteur selon la revendication 1, **caractérisé en ce que** ledit groupe de synchronisation comprend une paire de vérins hydrostatiques (50, 51) disposée dans un circuit fermé en série, un vérin (50) étant monté pivotant à de ses extrémités (36, 48) entre un levier (30) du moyeu de la roue (17) et ledit châssis avant, et l'autre vérin (51) étant monté pivotant à ses extrémités (49, 52) entre ledit châssis avant et ledit châssis arrière (18).

6. Tracteur selon la revendication 5, **caractérisé en ce que** ladite première paire de vérins hydrauliques à double effet (21, 22) a également au moins un vérin à double effet (56 ou 57) fixé à celle-ci d'une manière articulée entre ledit châssis avant et ledit châssis arrière (18).

7. Tracteur selon la revendication 5, **caractérisé en ce que** ladite première paire de vérins hydrauliques à double effet (21, 22) a également une seconde paire de vérins (56, 57) avec un vérin à simple effet fixé à celle-ci placé d'une manière articulée entre ledit châssis avant et ledit châssis arrière (18).
